# EUROPEAN PATENT APPLICATION

(11) **EP 2 503 471 A1**
(43) Date of publication of application: **26.09.2012**
(21) Application number: 11159431.3
(22) Date of filing: 23.03.2011
(51) Int. Cl.: G06F 17/30

(54) **Information management system and associated process**

(71) Applicant: Detector de Seguimiento y Transmision, S.A., 28108 Alcobendas Madrid (ES)
(72) Inventor: Sen Jimenez, Juan Manuel, Madrid 28108 ALCOBENDAS (ES)
(74) Representative: Mato Adrover, Ángel Luis

(57) **Abstract**

The invention relates to a system having mobile devices associated with a location registration system, and such devices will have an application which collects either manually entered data or automatically captured data such as positioning data, a communication server responsible for connecting the mobile devices on one hand and a database which in turn receives the information coming from control users on one hand and from a management server. Not only is the most accurate possible information reflected in the mobile terminals in real time, but so is the information captured by each of the mobile terminals in combination with the location information, the orders sent from the control stations and the static information from the databases, making this information global and integrated information, increasing the value thereof.

## Description

### Object of the Invention

As established in the title, the object of the present invention is both an information management system, and the associated process, for managing information in the indicated manner.

The present invention is characterized by the special features of each of the steps of the process and the association thereof with the necessary means such that an optimized management of all the information generated over a predetermined time, which results in a productivity improvement given that all the collected information can be used, is achieved.

Not only is the system characterized by the nature of the pieces of equipment used but also by their connectivity and transmission of information between them.

Therefore, the present invention is confined within the scope of information management processes and systems for managing information generated by the users themselves during their activities.

### Background of the Invention

There are a number of information management systems and they are managed from databases, web applications, etc. Generally, these information management systems only capture information from fixed positions, the information being transmitted to databases.

However, when performing different activities, information is continuously generated, such as for example information relating to positioning or alerts sent from control units, which information is neither managed nor correctly treated, therefore said information management does not allow improving the synergy and effects derived from jointly integrating the information of said nature.

Therefore, an object of the present invention is to overcome the drawbacks derived from the information management systems used up until now which do not allow integrating on-line information transmitted by the users themselves, or information sent from a control station, developing to that end an information management process and system such as that described below and the essential nature of which is included in claim one.

### Description of the Invention

The object of the present invention is to develop an information management process which allows integrating in a joint process the information contained in the databases, which could be referred to as static and hardly variable information, together with dynamic information developed during a time period, such as for example the location or instructions sent from an operator.

Another object of the invention is to develop an architecture of information management means with a series of particular and precise features, such that the connectivity between them allows a synergistic result both in real time and in the long-term.

The elements forming part of the information management system are:
- Mobile devices associated with a location registration system, which mobile devices will have an application which collects either manually entered data or automatically captured data, such as positioning data.
- A location management server of each of the mobile devices which is responsible for storing and registering the position of each of the mobile devices at all times.
- A communication server responsible for the connectivity between the mobile devices on one hand and a database.
- The database in turn receives the information coming from control users on one hand and from a management server.
- Control terminals through which control users enter dynamic information that has to be managed on-line
- And finally, it has a management server which stores data that could be referred to as static data or data with few changes over time.

The information management process starts with a connection from each of the terminals to the application contained therein. If the connection to the application does not occur, the information management process does not occur. Once the application is connected, the mobile terminal regularly transmits its position to the location management server, which information is stored and managed, a connection and communication is additionally established with the communication server which establishes a connection and connectivity between each of the mobile terminals and with a database which integrates the information coming from control terminals and on the other hand the information coming from a management server which stores the data which is generally not variable but can be updated.

As a result of the described architecture, a synergy and re-enhancement of the functionality of each of the elements forming part of the system is achieved. On one hand, the information related to the location of each of the terminals stored over time can be used and integrated, on the other hand, the on-line information sent from each of the control stations can be integrated.

Thus not only is the most accurate possible information reflected in the mobile terminals in real time, but so is the information captured by each of the mobile terminals in combination with the location information, the orders sent from the control stations and the static information from the databases, making this information global and integrated information, increasing the value thereof, as it allows being used in studies, statistics, graphs, improving the performance of the system as a whole.

### Description of the Drawings

To complement the description that is being made and for the purpose of aiding to better understand the features of the invention, a set of drawings depicting the most significant details of the invention is attached with an illustrative and non-limiting character.

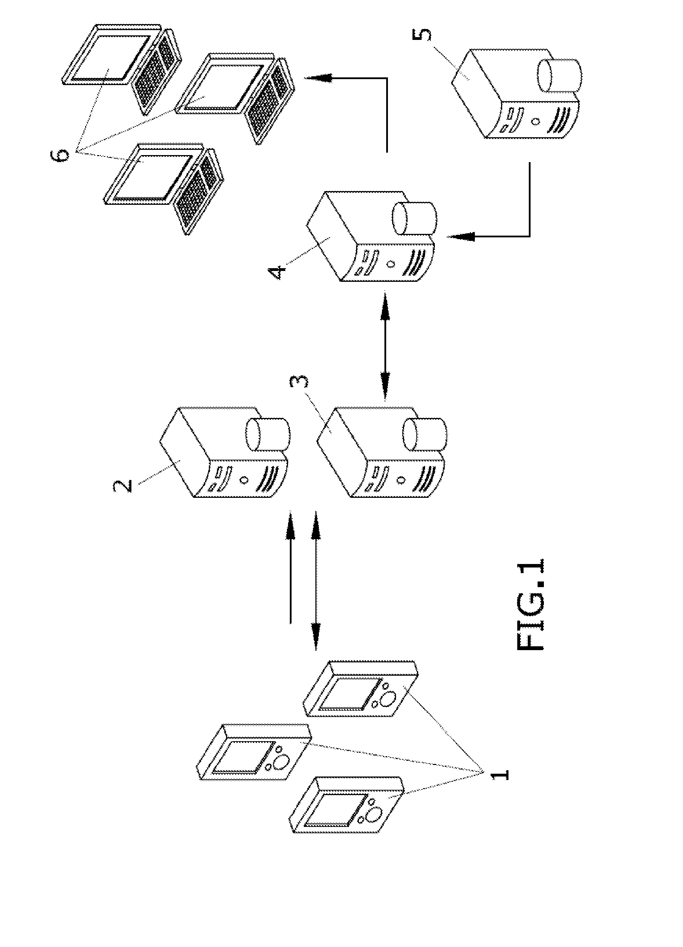

Figure 1 shows a depiction of the architecture of an information management system such as the object of the invention

### Description of a Preferred Embodiment

A preferred embodiment of the proposed invention is described below in view of the drawings.

Figure 1 shows how the architecture of the information management system is formed by a series of mobile terminals (1) which can range from smart phones, a PDA, and the like. These terminals internally host an application for capturing data and for displaying the information received from control stations (6) and from a management server (5), which contains therein a series of information which could be referred to as static information because although it can be updated, it is not continuously dynamic.

The mobile devices (1) regularly send over time their location to a location or positioning management server (2). This information will be integrated with the information sent from the control stations (6).

On the other hand, the mobile devices (1) also have a connection with a communication server (3), responsible for establishing communication with the control stations (6) and a management server (5) through a database (4), which jointly integrates the more dynamic information coming from the control stations with the information which generally lasts longer over time and is hosted in the management server (5).

As a result of this system, a synergy and improvement of the functionality of each of the elements and means forming part of the system is achieved, which results in an improvement of the information reflected on each of the mobile terminals (1), as well as for the subsequent studies, analysis and statistics in which all the information of the system is jointly integrated, i.e., the location or positioning information, the information coming from the control stations and the information hosted in the management server.

Variations in materials, shape, size and arrangement of the component elements described in a non-limiting manner do not alter the essential nature of this invention, such description being sufficient to enable a person skilled in the art to reproduce it.

## Claims

1. An information management system, **characterized in that** it has:
- Mobile devices (1) associated with a location registration server (2), wherein the mobile devices (1) will have an application which collects either manually entered data or automatically captured data, such as positioning data;
- A location management server (2) of each of the mobile devices (1) which is responsible for storing and registering the position of each of the mobile devices at all times;
- A communication server (3) responsible for the connectivity between the mobile devices (1) on one hand and a database (4);
- The database (4) in turn receives the information coming from control stations (6) on one hand and from a management server (5);
- Control terminals or control stations (6) through which control users enter dynamic information that has to be managed on-line;
- And finally, it has a management server (5) which stores data that could be referred to as static data or data with few changes over time.

2. An information management process associated with the previously claimed information management system, **characterized in that** it starts with a connection from each of the terminals to the application contained therein, once the application is connected, the mobile terminal regularly transmits its position to the location management server, which information is stored and managed, a connection and communication is additionally established with the communication server (3) which establishes a connection and connectivity between each of the mobile terminals and with a database which integrates the information coming from control terminals (6) and on the other hand the information coming from a management server (6) which stores the data which is generally not variable but can be updated.
